# EUROPÄISCHE PATENTSCHRIFT

(11) **EP 1 170 537 B1**
(45) Veröffentlichungstag und Bekanntmachung des Hinweises auf die Patenterteilung: **22.08.2007**
(21) Anmeldenummer: 01113467.3
(22) Anmeldetag: 02.06.2001
(51) Int. Cl.: F16L 13/14, F16L 33/18

(54) **Rohrverbindungselement**
Pipe connecting element
Raccord de tuyaux

(30) Priorität: 07.07.2000 DE 10033206
(43) Veröffentlichungstag der Anmeldung: 09.01.2002
(73) Patentinhaber: Uponor Innovation AB, 513 81 Fristad (SE)
(72) Erfinder: Brägelmann, Peter, 48607 Ochtrup (DE); Frieling, Werner, 48342 Rheine (DE)
(74) Vertreter: Hilleringmann, Jochen

(56) Entgegenhaltungen:
- EP-A- 0 942 219
- EP-A- 1 052 443
- WO-A-00/15995
- DE-U- 29 811 506
- US-A- 5 653 475
- US-A- 5 934 711

## Beschreibung

Die Erfindung betrifft ein Rohrverbindungselement für Rohre zum Leiten eines ersten und mindestens eines zweiten Fluids mit einem Dichtbereich mit unterschiedlichen Dichtelementen, wobei durch gezielte Kombination von Dichtelementen eine Dichtwirkung gegen den Austritt verschiedener gasförmiger und/oder flüssiger Fluide erzielt werden kann.

Verbindungselemente mit Dichtbereichen sind grundsätzlich bekannt und werden in einer Vielzahl von Applikationen eingesetzt. Beispiele für Rohrverbindungselemente sind in DE-C-198 38 125, DE-U-298 11 506 und F.-K. Läge: "Doppelt und dreifach", Aufsatz in "IKZ-Haustechnik Heft 12/1997, S. 62 bis 67 beschrieben, wobei in WO-A-00/15995 ein Pressfitting mit mindestens zwei Dichtelementen aus unterschiedlichen Materialien und aus EP-A-1 052 443 (Dokument nach Artikel 54 (3) EPÜ) ein Steckfitting mit ebenfalls zwei Dichtelementen unterschiedlicher Materialien beschrieben ist. Vornehmlich wird durch die Dichtbereiche ein Aus- oder Eintritt von Fluiden gasförmiger oder flüssiger Art verhindert, wobei in WO-A-00/15995 neben einer Fluidabdichtung bei Normaltemperaturen noch eine zusätzliche Abdichtung im Brandfalle vorgesehen ist.

Insbesondere im Bereich des Rohrleitungsbaus oder bei Schlauchleitungen zum Transport von Gasen oder Flüssigkeiten werden Rohrverbindungselemente mit Dichtbereichen eingesetzt. Diese Verbindungselemente sind durch die Wahl des Materials oder des Materialtyps der Dichtungselemente auf bestimmte Anwendungsfelder adaptiert. Dies liegt daran, dass die Dichtstoffe bei mechanischen, physikalischen oder chemischen Einwirkungen strukturellen Veränderungen unterliegen können. Diese Veränderungen können derart sein, dass sich die mechanischen Eigenschaften oder die Dichtwirkung des Dichtelements verschlechtern. Das kann zum Versagen des Dichtelementes führen.

Neben chemischen, physikalischen und mechanischen Beanspruchungsgrenzen engen Zulassungsrichtlinien und -normen bzw. das Vorhandensein einer spezifischen Zulassung in einem spezifischen Land die Wahl des Wirkstoffes respektive des Werkstofftyps weiter ein. Nicht für jeden Werkstoff oder Werkstofftyp, der aus technischer Sicht einsetzbar wäre, besteht eine Zulassung. Die Zulassungsrichtlinien bzw. das Vorhandensein von Zulassungen ist landesspezifisch. Bei gleicher Applikation kommt es vor, dass einzelne Länder die im Ausland anerkannten Werkstoffe nicht zulassen, jedoch Werkstoffe fordern, die wiederum im Ausland nicht zulässig sind.

Der Erfindung liegt die Aufgabe zu Grunde, ein Rohrverbindungselement zu schaffen, das gegenüber Rohren zum Leiten unterschiedlicher Fluide zuverlässig abdichtet.

Zur Lösung dieser Aufgabe wird mit der Erfindung ein Rohrverbindungselement für Rohre zum Leiten eines ersten oder mindestens eines zweiten Fluids vorgeschlagen, das mit den Merkmalen des Anspruchs 1 versehen ist. Die Unteransprüche betreffen einzelne Ausgestaltungen des erfindungsgemäßen Rohrverbindungselements.

Das erfindungsgemäße Rohrverbindungselement weist einen Verbindungskörper mit mindestens einem Dichtbereich auf, in dem ein Rohr fluiddicht anschließbar ist. Innerhalb des Dichtbereiches befinden sich mindestens zwei Dichtelemente unterschiedlichen Typs, Materials oder Ausgestaltung, wobei diese mindestens zwei Dichtelemente zum Abdichten des Rohrverbindungselements an Rohren dienen, durch die unterschiedliche Fluide geleitet werden. So ist es erfindungsgemäß vorgesehen, im Dichtbereich mindestens ein erstes Dichtelement vorzusehen, das bei Gas (zweites Fluid) führenden Rohren gegenüber diesen abdichtet, während der Dichtbereich zusätzlich mindestens ein zweites Dichtelement aufweist, das bei Wasser (erstes Fluid) führenden Rohren abdichtet. Aus den unterschiedlichsten Gründen (werkstoffspezifisch, zulassungsbedingt usw.) kann es sein, dass das erste (alternativ zweite) Dichtelement nicht in Kontakt mit dem zweiten (alternativ ersten) Fluid gelangen darf, wenn das Rohrverbindungselement für das zweite (alternativ erste) Fluid führende Rohre eingesetzt wird. Daher ist erfindungsgemäß vorgesehen, dass das zweite Dichtelement hinter dem ersten Dichtelement angeordnet ist, so dass das erste Dichtelement das zweite Dichtelement vor einem Kontakt mit dem zweiten Fluid schützt (abschottet), wenn das Rohrverbindungselement an einem das zweite Fluid führenden Rohr angeschlossen ist. Das erste Dichtelement darf hingegen in Kontakt mit dem zweiten Fluid gelangen. Erfindungsgemäß wird als Material für das mindestens eine erste Dichtelement, das gegenüber Trinkwasser abdichten soll, vorteilhafterweise Ethylen-Propylen (EPDM) gewählt, während das mindestens eine zweite Dichtelement, das gegenüber Gas abdichten soll, Nitril-Butadien (NBR) aufweist.

Mit dem erfindungsgemäßen Konzept der Anordnung mindestens eines ersten und mindestens eines zweiten Dichtelements ist es möglich, ein und dasselbe Rohrverbindungselement für unterschiedliche Fluide führende Rohre, z.B. sowohl für Trinkwasser als auch für Gas führende Rohrleitungen einzusetzen. Zulassungsbedingt dürfen im Trinkwasserbereich für die Dichtelemente von Rohrverbindungselementen nur bestimmte Materialien eingesetzt werden. Diese Materialien sind weniger geeignet, wenn es darum geht, auch ein Gas führendes Rohr an das erfindungsgemäße Rohrverbindungselement anzuschließen. Daher wird das für die Gasanwendung benötigte mindestens eine zweite Dichtelement bezogen auf das Fluid hinter dem für die Trinkwasseranwendung erforderlichen mindestens einen ersten Dichtelement angeordnet. Auf diese Weise wird verhindert, dass das Trinkwasser (erstes Fluid), wenn es denn in den Dichtbereich eindringt, durch das mindestens eine erste Dichtelement vor einer Kontaktierung mit dem mindestens einen zweiten Dichtelement geschützt ist. Umgekehrt gelangt selbstverständlich dann, wenn das Rohrverbindungselement für Gas führende Rohre eingesetzt wird, auch das Gas (zweites Fluid) in Kontakt mit dem ersten Dichtelement, wenn es in den Dichtbereich eindringt. Dies ist aber weiter nicht tragisch, da bei Gas führenden Rohren Einschränkungen bezüglich der Materialwahl für die Dichtelemente, wie sie bei Trinkwasser führenden Rohren gelten, in dieser Form nicht bestehen.

Durch die Erfindung wird also ein Rohrverbindungselement geschaffen, das nicht etwa lediglich mit verschiedenen Dichtelementen zum Abdichten gegenüber unterschiedliche Fluide führenden Rohre ausgestattet ist, sondern sich darüber hinaus durch eine spezielle Anordnung der Dichtelemente auszeichnet, die materialspezifischen oder zulassungsspezifischen Randbedingungen der Fluide genügen, die durch die Rohre strömen, an welchen das Rohrverbindungselement angeschlossen werden kann.

Ein weiterer Aspekt der Erfindung ist darin zu sehen, dass die einzelnen Dichtfunktionen durch die Kombination einzelner Dichtungssätze superponiert werden. Es werden Dichtungssätze kombiniert, die sich entweder nach medienspezifischer Dichteignung oder nach landesspezifischer Zulassungsfähigkeit respektive bestehenden Zulassungen unterscheiden. Das erfindungsgemäße Verbindungselement wird damit für unterschiedliche Applikationen oder auch in Ländern mit unterschiedlichen Zulassungsbedingungen einsetzbar.

Nach dem zuvor genannten Prinzip lassen sich selbstverständlich auch erfindungsgemäße Rohrverbindungselemente aufbauen, die mit mehr als zwei für unterschiedliche Fluide wirkenden Dichtelementen ausgestattet sind. So ist es beispielsweise möglich, dass das Rohrverbindungselement über mindestens drei verschiedene jedoch einfach oder mehrfach vorhandene Dichtelemente verfügt, die dann jeweils zur Wirkung kommen, wenn das Rohr, an dem das Rohrverbindungselement angeschlossen ist, eines von drei möglichen Fluiden führt. Das mindestens eine erste Dichtelement dient dabei der Abdichtung gegenüber einem ersten Fluid, das mindestens eine zweite Dichtelement gegenüber einem zweiten Fluid und das mindestens eine dritte Dichtelement gegenüber einem dritten Fluid. Dasjenige der drei Dichtelemente, das mit keinem derjenigen beiden Fluide in Kontakt gelangen darf, gegenüber denen es nicht abzudichten braucht, ist erfindungsgemäß hinter den anderen der Dichtelemente angeordnet, wobei sich diese Anordnung auf die Richtung bezieht, in der Fluid in den Dichtbereich einströmen kann. Eines der beiden verbleibenden Dichtelement wird erfindungsgemäß hinter dem anderen verbleibenden Dichtelement angeordnet, wenn es mit demjenigen Fluid, für das das andere Dichtelement vorgesehen ist, nicht in Kontakt gelangen darf. Schließlich darf das verbleibende andere Dichtelement mit sämtlichen drei Fluiden in Kontakt gelangen, weshalb es bezogen auf die Richtung einer möglichen Einströmung von Fluid in den Dichtbereich als erstes angeordnet ist. Anstelle dieses beschriebenen Falles mit lediglich drei verschiedenen Dichtelementen lassen sich mit dem erfindungsgemäßen Konzept auch Rohrverbindungselemente mit mehr als drei unterschiedlichen Dichtelementen ausbilden.

Die Erfindung ist nicht darauf beschränkt, dass das Rohrverbindungselement pro abzudichtendem Fluidtyp lediglich ein Dichtelement aufweist. Vielmehr ist es so, dass pro abzudichtendem Fluidtyp mehr als ein Dichtelement vorgesehen sein kann. Die Dichtelemente können also in Gruppen angeordnet sein, wobei diese Gruppen wiederum, wie oben anhand von einzelnen Dichtelementen beschrieben, hintereinanderliegend angeordnet sind.

Bei den Dichtelementen des erfindungsgemäßen Rohrverbindungselements kann es sich um separate Elemente insbesondere in Form von Dichtungsringen und vorzugsweise O-Ringen handeln. Alternativ oder zusätzlich dazu ist es aber auch möglich, dass die Dichtelemente unterschiedliche Formen und Ausgestaltungen aufweisen. So ist es beispielsweise möglich, dass für die Abdichtung gegenüber einem ersten Fluid das mindestens eine erste Dichtelement ein separates Elemente (beispielsweise O-Ring) ist, während das zweite Dichtelement zum Abdichten gegenüber dem zweiten Fluid als Dichtlippe oder Labyrinthdichtung ausgebildet ist. Die Dichtelemente können unabhängig davon, ob es sich bei ihnen um separate Elemente oder um spezielle Ausformungen des Verbindungskörpers in dessen Dichtbereich handelt, integraler Bestandteil des Dichtbereichs des Verbindungskörpers sein. Unter einem integralen Bestandteil wird hierbei auch ein Dichtelement verstanden, das mit dem Dichtbereich des Verbindungskörpers kraftschlüssig (form-, reib- oder stoffschlüssig) verbunden ist.

Abschließend sei angemerkt, dass das erfindungsgemäße Rohrverbindungselement zwei oder mehr Dichtbereiche zum Anschluss von zwei oder mehr Rohren aufweisen kann, wie es z.B. bei einem Verbinder, T- oder Kreuzungsstück der Fall ist.

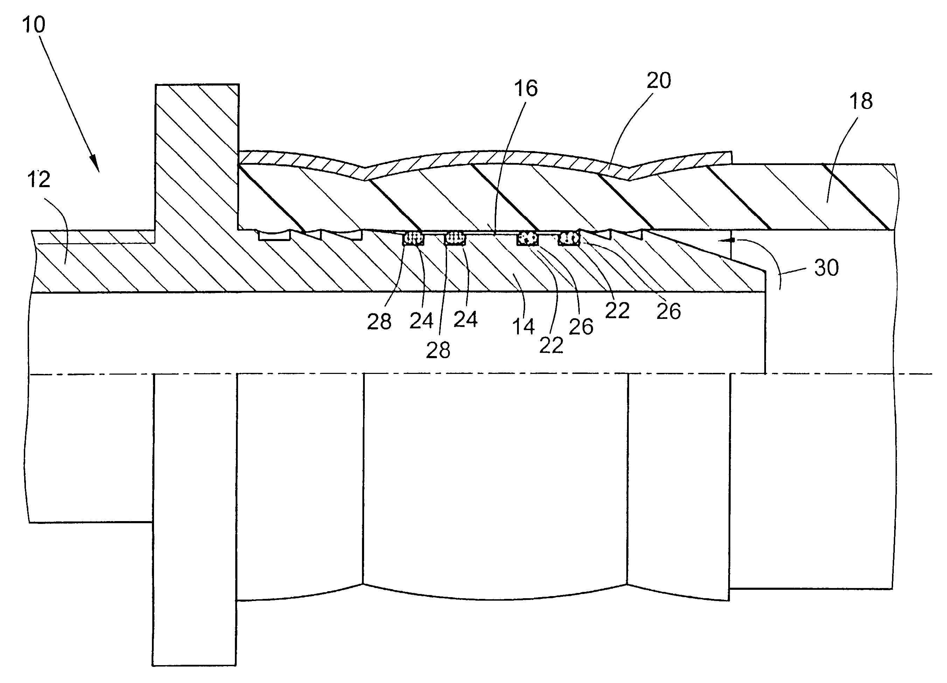

Nachfolgend wird die Erfindung anhand der Zeichnung, die einen Halbschnitt durch ein beispielhaftes Rohrverbindungselement mit angeschlossenem Rohr zeigt, näher erläutert.

Das dargestellte Rohrverbindungselement 10 (Fitting) weist einen Körper 12 mit einem Dichtbereich 14 auf. Dieser Dichtbereich 14 weist eine außenliegende Dichtfläche 16 auf, auf die ein anzuschließendes Rohr 18 aufschiebbar ist. Das Rohr 18 wird mittels einer plastisch verformbaren Presshülse 20 gegen den zylindrischen Dichtbereich 14 mit dessen umlaufender Dichtfläche 16 gepresst. Das Rohrverbindungselement 10 soll sowohl bei Trinkwasser führenden Rohren als auch bei Gas führenden Rohren eingesetzt werden können.

Innerhalb des Dichtbereichs 14 des Rohrverbindungselements 10 befinden sich zwei Sätze unterschiedlicher Dichtelemente 22,24, die in diesem Ausführungsbeispiel jeweils als O-Ringe ausgebildet sind. Diese ringförmigen Dichtelemente 22,24 befinden sich in ersten und zweiten Aufnahmenuten 26,28, die innerhalb des Dichtbereichs 14 des Rohrverbindungskörpers 12 ausgebildet sind. Während die ersten Dichtelemente 22 aus einem bei der Trinkwasseranwendung zugelassenen Material, nämlich Ethylen-Propylen (EPDM) bestehen, sind die zweiten Dichtelemente 24 aus Nitril-Butadien (NBR). Dieser Werkstoff, der für die Gasanwendung zugelassen und gegebenenfalls auch gefordert ist, ist jedoch bei der Trinkwasseranwendung nicht zulässig. Um das Rohrverbindungselement 10 aber dennoch im Trinkwasserbereich einsetzen zu können, wird erfindungsgemäß derart verfahren, dass die ersten Dichtelemente 22 bezogen auf eine mögliche Einströmung von Fluid in Richtung des Pfeils 30 zur Dichtfläche 16 des Dichtbereichs 14 hin vor den zweiten Dichtelementen 24 angeordnet sind. Damit wird verhindert, dass dann, wenn durch das Rohr 18 Trinkwasser strömt, dieses in Kontakt mit dem Material der zweiten Dichtelemente 24, also mit Nitril-Butadien gelangt. Für die Abdichtung bei Einsatz des Rohrverbindungselements 10 für ein Rohr 18, das Gas führt, dichten die zweiten Dichtelemente 24 ab. Strömt also Gas zur Dichtfläche 16 hin, so mag dieses Gas möglicherweise die ersten Dichtelemente 22 passieren, wird aber spätestens an den zweiten Dichtelementen 24 aufgehalten. Die Kontaktierung des Gases mit dem Material der ersten Dichtelemente 22 ist unkritisch, so dass insgesamt damit ein Rohrverbindungselement 10 geschaffen ist, das gegenüber Trinkwasser und Gas abdichtet, wobei zusätzlich dafür gesorgt ist, dass das Material für die Abdichtung gegenüber Gas nicht in Kontakt mit dem Trinkwasser gelangt, wenn das Rohrverbindungselement 10 für den Trinkwasserbereich eingesetzt wird.

Die Erfindung wurde vorstehend anhand eines Rohranschlussstückes erläutert. Ebenso kann es sich bei dem Rohrverbindungselement auch um eine Kupplung, einen Winkel, ein T-Stück oder einen Verteiler handeln. Als Übergang können Innen- oder Außengewinde vorgesehen sein. Schließlich kann das Rohrverbindungselement anstelle des zuvor beschriebenen an der Innenseite des angeschlossenen Rohres abdichtenden Dichtfläche auch eine an der Außenseite des Rohres anliegende Dichtfläche aufweisen. Darüber hinaus können die Materialien für die mindestens zwei unterschiedlichen Dichtelemente auch derart abgestimmt sein, dass das Rohrverbindungselement den in unterschiedlichen Ländern geltenden spezifischen Anwendungen und Zulassungsbeschränkungen genügt. Als Material, aus dem der Rohrverbindungskörper 12 besteht bzw. aus dem diejenigen Bereich des Rohrverbindungskörpers 12 bestehen, die mit den Fluiden in Kontakt gelangen, wird solches Material eingesetzt, das inert gegenüber den Fluiden ist, für die das Rohrverbindungselement eingesetzt werden kann.

## Patentansprüche

1. Rohrverbindungselement für Rohre zum Leiten von Wasser oder Gas, mit
- einem Verbindungskörper (12),
- mindestens einem an dem Verbindungskörper (12) ausgebildeten Dichtbereich (14,16), in dem ein Rohr (18) fluiddicht anschließbar ist,
- mindestens einem ersten Dichtelement (22) innerhalb des Dichtbereichs (14,16) zum Abdichten gegenüber einem Wasser führenden Rohr,
- einer plastisch verformbaren Presshülse (20) zum Pressen des Rohres (18) gegen den Dichtbereich (14,16) des Verbindungskörpers (12) und
- mindestens einem zweiten Dichtelement (24) innerhalb des Dichtbereichs (14,16) zum Abdichten gegenüber einem Gas führenden Rohr,
- wobei das mindestens eine zweite Dichtelement (24) bezogen auf ein möglicherweise erfolgendes Eindringen von Wasser oder Gas in den Dichtbereich (14,16) hinter dem mindestens einen ersten Dichtelement (22) angeordnet ist, so dass das Material des zweiten Dichtelements (24) bei Anschluss eines Wasser führenden Rohres vor einem Kontakt mit dem Wasser geschützt ist, wobei das Material des ersten Dichtelements (22) bei Anschluss eines Gas führenden Rohres mit dem Gas in Kontakt gelangen darf,
**dadurch gekennzeichnet,**
- **dass** das erste Dichelement (22) Ethylen-Propylen (EPDM) und das zweite Dichtelement (24) Nitril-Butadien (NBR) aufweist.

2. Rohrverbindungselement nach Anspruch 1, **dadurch gekennzeichnet, dass** das erste und/oder das zweite Dichtelement (22,24) ein von dem Verbindungskörper (12) separates Element und/oder durch Formung des Verbindungskörpers (12) in dessen Dichtbereich (14,16) ausgebildet ist/sind.

3. Rohrverbindungselement nach Anspruch 1 oder 2, **dadurch gekennzeichnet, dass** das erste und/oder das zweite Dichtelement (22,24) integraler Bestandteil des Dichtbereichs (14,16) des Verbindungskörpers (12) ist/sind.

4. Rohrverbindungselement nach einem der Ansprüche 1 bis 3, **dadurch gekennzeichnet, dass** das erste und/oder das zweite Dichtelement (22,24) als in einer Aufnahmenut (26,28) des Dichtbereichs (14,16) des Verbindungskörpers (12) untergebrachter Dichtring ausgebildet ist/sind.

5. Rohrverbindungselement nach einem der Ansprüche 1 bis 4, **dadurch gekennzeichnet, dass** innerhalb des Dichtbereichs (14,16) des Verbindungskörpers (12) mindestens ein drittes Dichtelement zum Abdichten gegenüber einem Rohr für ein drittes Fluid angeordnet ist und dass das dritte Dichtelement bezogen auf ein möglicherweise erfolgendes Eindringen von Fluid in den Dichtbereich (14,16) hinter dem zweiten Dichtelement (24) angeordnet ist, so dass das Material des dritten Dichtelements bei Anschluss eines Wasser und/oder Gas führenden Rohres vor einem Kontakt mit dem Wasser und/oder Gas geschützt ist, wobei das Material des ersten und/oder das Material des zweiten Dichtelements (22,24) bei Anschluss eines das dritte Fluid führenden Rohres mit diesem dritten Fluid in Kontakt gelangen darf.

6. Rohrverbindungselement nach einem der Ansprüche 1 bis 5, **dadurch gekennzeichnet, dass** der Verbindungskörper zwei oder mehr Dichtbereiche mit jeweils mindestens einem ersten, mindestens einem zweiten und gegebenenfalls mindestens einem dritten Dichtelement aufweist.

## Claims

1. A pipe connecting element for water or gas pipes, comprising
- a connection body (12),
- at least one sealing region (14,16) provided on the connection body (12), said sealing region (14,16) being adapted for fluid-tight connection of a pipe (18) thereto,
- at least one first sealing element (22) arranged in the sealing region (14,16) for sealing against a water pipe,
- a plastically deformeable press shell (20) for pressing the pipe (18) against the sealing region (14,16) of the connection body (12), and
- at least one second sealing element (24) in the sealing region (14, 16) for sealing against a gas pipe,
- said least one second sealing element (24) being arranged, in relation to a possible intrusion of water or gas into the sealing region (14,16), behind said at least one first sealing element (22) so that, upon connection of a water pipe, the material of the second sealing element (24) is proteced from contact with the water, whereas, upon connection of a gas pipe, the material of the first sealing element (22) is allowed to get into contact with the gas,
**characterized in**
- **that** the first sealing element (22) comprises ethlyene-propylene (EPDM) and the second sealing element (24) comprises nitrile-butadiene (NBR).

2. The pipe connecting element according to claim 1, **characterized in that** the first and/or the second sealing element (22,24) is/are an element provided separately of the connection body (12), and/or is/are formed by shaping the connection body (12) in its sealing region (14,16).

3. The pipe connecting element according to claim 1 or 2, **characterized in that** the first and/or the second sealing element (22,24) is/are an integral component of the sealing region (14,16) of the connection body (12).

4. The pipe connecting element according to any one of claims 1 to 3, **characterized in that** the first and/or the second sealing element (22, 24) is/are provided as a sealing ring accommodated in a receiving groove (26,28) of the sealing region (14,16) of the connection body (12).

5. The pipe connecting element according to any one of claims 1 to 4, **characterized in that** at least one third sealing element is provided in the sealing region (14,16) of the connection body (12) for sealing against a pipe for a third fluid, and that, in relation to a possible intrusion of fluid into the sealing region (14,16), said third sealing element is arranged behind said second sealing element (24) so that, upon connection of a water or gas pipe, the material of the third sealing element is proteced from contact with the water and/or gas, whereas, upon connection of a pipe conducting said third fluid, the material of the first sealing element and/or the material of the second sealing element (22,24) is allowed to get into contact with said third fluid.

6. The pipe connecting element according to any one of claims 1 to 5, **characterized in that** the connection body comprises two or more sealing regions respectively including at least one first, at least one second and, if required, at least one third sealing element.

## Revendications

1. Elément de raccord de tuyau pour des tuyaux destinés à la conduite d'eau ou de gaz, comportant
- un corps de raccord (12),
- au moins une zone d'étanchéité (14, 16) réalisée contre le corps de raccord (12), dans laquelle un tuyau (18) peut être raccordé de façon étanche aux fluides,
- au moins un premier élément d'étanchéité (22) dans la zone d'étanchéité (14, 16) pour rendre étanche par rapport à un tuyau de conduite d'eau,
- un manchon de compression (20) déformable plastiquement, destiné à la compression du tuyau (18) contre la zone d'étanchéité (14, 16) du corps de raccord (12) et
- au moins un deuxième élément d'étanchéité (24) dans la zone d'étanchéité (14, 16) pour rendre étanche par rapport à un tuyau de conduite de gaz,
- dans lequel le deuxième élément d'étanchéité (24) au moins est disposé, relativement à une éventuelle pénétration d'eau ou de gaz dans la zone d'étanchéité (14, 16), derrière le premier élément d'étanchéité (22) au moins de telle sorte que le matériau du deuxième élément d'étanchéité (24) est protégé d'un contact avec l'eau lors du raccordement d'un tuyau de conduite d'eau, le matériau du premier élément d'étanchéité (22) pouvant entrer en contact avec le gaz lors du raccordement d'un tuyau de conduite de gaz,
**caractérisé en ce que**
- le matériau du premier élément d'étanchéité (22) comprend de l' éthylène-propylène (EPDM) et le deuxième élément d'étanchéité, (24) du nitrile-butadiène (NBR).

2. Elément de raccord de tuyau selon la revendication 1, **caractérisé en ce que** le premier et/ou le deuxième élément d'étanchéité (22, 24) est/sont réalisés en tant qu'élément séparé du corps de raccord (12) et/ou par moulage du corps de raccord (12) dans sa zone d'étanchéité (14, 16).

3. Elément de raccord de tuyau selon la revendication 1 ou 2, **caractérisé en ce que** le premier et/ou le deuxième élément d'étanchéité (22, 24) fait/font partie intégrante de la zone d'étanchéité (14, 16) du corps de raccord (12).

4. Elément de raccord de tuyau selon l'une des revendications 1 à 3, **caractérisé en ce que** le premier et/ou le deuxième élément d'étanchéité (22, 24) est/sont réalisés en tant que bague d'étanchéité logée dans une rainure de réception (26,28) de la zone d'étanchéité (14, 16) du corps de raccord (12).

5. Elément de raccord de tuyau selon l'une des revendications 1 à 4, **caractérisé en ce qu'**à l'intérieur de la zone d'étanchéité (14, 16) du corps de raccord (12), au moins un troisième élément d'étanchéité est disposé pour l'étanchéité par rapport à un tuyau pour un troisième fluide, et **en ce que** le troisième élément d'étanchéité est disposé, relativement à une éventuelle pénétration de fluide dans la zone d'étanchéité (14, 16), derrière le deuxième élément d'étanchéité (24), de telle sorte que le matériau du troisième élément d'étanchéité est protégé d'un contact avec l'eau et/ou le gaz lors du raccordement d'un tuyau de conduite d'eau et/ou de gaz, le matériau du premier et/ou le matériau du deuxième élément d'étanchéité (22, 24) pouvant entrer en contact avec ce troisième fluide lors du raccordement d'un tuyau de conduite du troisième fluide,

6. Elément de raccord de tuyau selon l'une des revendications 1 à 5, **caractérisé en ce que** le corps de raccord présente deux zones d'étanchéité ou plus avec chacune au moins un premier, au moins un deuxième et le cas échéant, au moins un troisième élément d'étanchéité.
